(19) Europäisches Patentamt / European Patent Office / Office européen des brevets

(11) **EP 4 723 207 A1**

(12) **EUROPEAN PATENT APPLICATION**
published in accordance with Art. 153(4) EPC

(43) Date of publication:
08.04.2026 Bulletin 2026/15

(21) Application number: 24815337.1

(22) Date of filing: 22.05.2024

(51) International Patent Classification (IPC):
$H01M\ 4/139^{(2010.01)}$  $H01M\ 4/13^{(2010.01)}$
$H01M\ 4/62^{(2006.01)}$  $H01M\ 10/052^{(2010.01)}$
$H01M\ 10/054^{(2010.01)}$  $H01M\ 10/058^{(2010.01)}$
$H01M\ 10/0566^{(2010.01)}$

(52) Cooperative Patent Classification (CPC):
Y02E 60/10; Y02P 70/50

(86) International application number:
PCT/JP2024/018889

(87) International publication number:
WO 2024/247853 (05.12.2024 Gazette 2024/49)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 31.05.2023 JP 2023090135

(71) Applicant: FUJIFILM Corporation
Tokyo 106-8620 (JP)

(72) Inventor: MIZOGUCHI, Takao
Minamiashigara-shi, Kanagawa 250-0193 (JP)

(74) Representative: HGF
HGF Limited
4th Floor, 1 City Square
Leeds LS1 2ES (GB)

(54) **METHOD FOR MANUFACTURING NON-AQUEOUS ELECTROLYTIC SOLUTION SECONDARY BATTERY, AND NON-AQUEOUS ELECTROLYTIC SOLUTION SECONDARY BATTERY**

(57) Provided are a method for manufacturing a non-aqueous electrolytic solution secondary battery in which a positive electrode collector, a positive electrode active material layer, a separator, a negative electrode active material layer, and a negative electrode collector are laminated in this order, the method including applying a slurry for forming a positive electrode onto the positive electrode collector to form a slurry-like positive electrode active material layer, and adding a solvent having a vapor pressure of 4.0 kPa or more to the slurry-like positive electrode active material layer, the slurry for forming a positive electrode, containing a positive electrode active material at a content of 75% by mass or more, a conductive auxiliary agent, an electrolyte, and a non-aqueous solvent (I) in which a content of the solvent having a vapor pressure of 4.0 kPa or more is less than 1.0% by mass; and a non-aqueous electrolytic solution secondary battery which can be obtained by the manufacturing method.

FIG. 1

EP 4 723 207 A1

**Description**

## BACKGROUND OF THE INVENTION

1. Field of the Invention

The present invention relates to a method for manufacturing a non-aqueous electrolytic solution secondary battery, and a non-aqueous electrolytic solution secondary battery.

2. Description of the Related Art

A non-aqueous electrolytic solution secondary battery typified by a lithium ion secondary battery has high energy density and is excellent in storage performance, low-temperature operability, and the like, and thus is widely used for portable electronic apparatuses such as a mobile phone and a notebook computer. In addition, the battery has been scaled up and used in transportation equipment such as automobiles, and the use of the battery as a storage device for nighttime power, power generation by natural energy, and the like has also been promoted.

A technique for increasing a capacity of the non-aqueous electrolytic solution secondary battery has been studied. For example, JP2017-147222A discloses a technique for causing an electrode active material layer to function as a secondary battery in a state of a slurry containing a high content of an active material. Specifically, JP2017-147222A discloses an electrochemical cell including:

a positive electrode consisting of a non-bonded body which contains a first active material and an electrolytic solution in a first non-aqueous liquid electrolyte;

a negative electrode consisting of a non-bonded body which contains a second active material and an electrolytic solution in a second non-aqueous liquid electrolyte; and

an ion-permeable membrane disposed between the positive electrode and the negative electrode,

in which the positive electrode and the negative electrode each have a thickness of approximately 200 $\mu$m to approximately 3,000 $\mu$m.

According to the technique disclosed in JP2017-147222A, since an electrode active material layer (a positive electrode active material layer and a negative electrode active material layer) contains an electrolyte and is in a slurry-like and non-bonded state, as in the positive electrode and the negative electrode, the electrode active material layer can be formed into a thick film while maintaining flexibility of the electrode active material layer, a binder which bonds solid particles is not required, and the charge capacity and the entire energy density can be significantly increased while maintaining the flexibility of the battery. The non-aqueous electrolytic solution secondary battery in which the electrode active material layer (positive electrode active material layer and/or negative electrode active material layer) is formed in a slurry state containing an electrolytic solution (electrolyte), as disclosed in JP2017-147222A, may be referred to as a semi-solid state secondary battery in the following description.

In addition, JP2019-186009A discloses that, in a case where an electrode active material layer of a semi-solid state secondary battery is formed of an electrode active material slurry containing an electrode active material, a lithium salt, and a non-aqueous solvent, a moisture content of the electrode active material slurry is set to be less than 500 ppm by mass, and a non-aqueous electrolytic solution secondary battery (semi-solid state secondary battery) having the electrode active material layer formed in this manner has a low internal resistance, a high capacity, and excellent cycle durability.

## SUMMARY OF THE INVENTION

In order to further increase a capacity (energy density) of the semi-solid state secondary battery, there is an attempt to increase a content of the positive electrode active material which intercalates and deintercalates ions in a slurry-like positive electrode active material layer containing a non-aqueous electrolytic solution. In this case, in the slurry for forming a positive electrode, used for forming the slurry-like positive electrode active material layer, a content of the positive electrode active material, which is solid particles, is further increased, and the slurry is applied onto a current collector. However, in a case where the content of the positive electrode active material in the slurry is high, properties of the slurry are in a state close to that of a powder while containing an electrolytic solution, and thus fluidity is decreased. The decrease in fluidity decreases an ion conductivity of the positive electrode active material layer, and thus, in order to increase the fluidity of the slurry, a certain amount of a low-viscosity non-aqueous solvent (low-viscosity solvent) is usually contained in a non-aqueous solvent which is a medium of the non-aqueous electrolytic solution. However, as a result of repeated studies, the present inventor has found that a coating film formed by applying the slurry for forming a positive electrode, containing the low-viscosity solvent, onto the positive electrode collector is likely to partially collapse, and there is a limitation in improving a battery performance of the battery to be obtained. The phenomenon is considered to be due to the fact that the low-viscosity solvent is highly volatile, and thus the coating film partially collapses as the low-viscosity solvent volatilizes during the formation of the coating film.

An object of the present invention is to provide a method for manufacturing a non-aqueous electrolytic solution secondary battery which is a semi-solid state secondary battery, in which, in formation of a slurry-like positive electrode active material layer containing a non-aqueous electrolytic solution, a positive electrode active material layer in which a positive electrode active material is highly contained can be formed while sufficiently suppressing collapse of the positive electrode active material layer, and the non-aqueous electrolytic solution secondary battery has a non-aqueous electrolytic solution formulation in which the positive electrode active material layer exhibits sufficiently high fluidity in a battery to be obtained, and as a result, it is possible to achieve higher battery performance; and a non-aqueous electrolytic solution secondary battery which can be obtained by the manufacturing method.

The above-described object of the present invention has been achieved by the following means.

[1] A method for manufacturing a non-aqueous electrolytic solution secondary battery in which a positive electrode collector, a positive electrode active material layer, a separator, a negative electrode active material layer, and a negative electrode collector are laminated in this order, the method comprising:
applying a slurry for forming a positive electrode onto the positive electrode collector to form a slurry-like positive electrode active material layer, and adding a solvent having a vapor pressure of 4.0 kPa or more to the slurry-like positive electrode active material layer, the slurry for forming a positive electrode, containing a positive electrode active material at a content of 75% by mass or more, a conductive auxiliary agent, an electrolyte, and a non-aqueous solvent (I) in which a content of the solvent having a vapor pressure of 4.0 kPa or more is less than 1.0% by mass.
[2] The method for manufacturing a non-aqueous electrolytic solution secondary battery according to [1],
in which the content of the solvent having a vapor pressure of 4.0 kPa or more in the non-aqueous solvent (I) is less than 0.1% by mass.
[3] The method for manufacturing a non-aqueous electrolytic solution secondary battery according to [1] or [2],
in which a contact angle of the solvent having a vapor pressure of 4.0 kPa or more with respect to the separator is 45° or less.
[4] The method for manufacturing a non-aqueous electrolytic solution secondary battery according to any one of [1] to [3], further comprising:
applying a slurry for forming a negative electrode onto the negative electrode collector to form a slurry-like negative electrode active material layer, and adding a solvent having a vapor pressure of 4.0 kPa or more to the slurry-like negative electrode active material layer, the slurry for forming a negative electrode, containing a negative electrode active material, a conductive auxiliary agent, an electrolyte, and the non-aqueous solvent (I).
[5] A non-aqueous electrolytic solution secondary battery obtained by the method for manufacturing a non-aqueous electrolytic solution secondary battery according to any one of [1] to [4].

In the description of the present invention, a numerical range represented by using "to" means a range including numerical values described before and after "to" as a lower limit value and an upper limit value.

In the present invention, "non-aqueous electrolytic solution" means an electrolytic solution which does not substantially contain water. That is, the "non-aqueous electrolytic solution" may contain a trace of water within a range that does not impair the effects of the present invention. The concentration of water in the "non-aqueous electrolytic solution" in the present invention is 200 ppm (based on mass) or less, preferably 100 ppm or less, and more preferably 20 ppm or less. The concentration of water is usually 1 ppm or more, because it is practically difficult to make an absolutely anhydrous non-aqueous electrolytic solution.

In the present invention, "non-aqueous solvent" also means a solvent which does not substantially contain water. That is, the "non-aqueous solvent" may contain a trace of water within a range that does not impair the effects of the present invention. The concentration of water in the "non-aqueous solvent" in the present invention is 200 ppm (based on mass) or less, preferably 100 ppm or less, and more preferably 20 ppm or less. The concentration of water is usually 1 ppm or more, because it is practically difficult to make an absolutely anhydrous non-aqueous solvent.

In the present invention, "collapse" of a slurry-like electrode active material layer means that a part of the slurry-like electrode active material layer is missing, a part of the electrode active material layer collapses, or a crack occurs in a part of the electrode active material layer.

With the method for manufacturing a non-aqueous electrolytic solution secondary battery according to the present invention, in formation of a slurry-like positive electrode active material layer containing a non-aqueous electrolytic solution, a positive electrode active material layer in which a positive electrode active material is highly contained can be formed while preventing collapse of the positive electrode active material layer, and the non-aqueous electrolytic solution secondary battery has a non-aqueous electrolytic solution formulation in which the positive electrode active material layer exhibits sufficiently high fluidity in the non-aqueous electrolytic solution secondary battery to be obtained, and thus it is possible to obtain a non-aqueous electrolytic solution secondary battery exhibiting higher battery performance. In addition, in the non-aqueous electrolytic solution secondary battery according to the present invention, the positive electrode active material layer has a non-aqueous electrolytic solution formulation with a high content of a positive electrode active material, in which the collapse of the positive electrode active material layer is suppressed and the positive electrode active material layer exhibits sufficiently high fluidity, thereby exhibiting higher battery performance.

**BRIEF DESCRIPTION OF THE DRAWINGS**

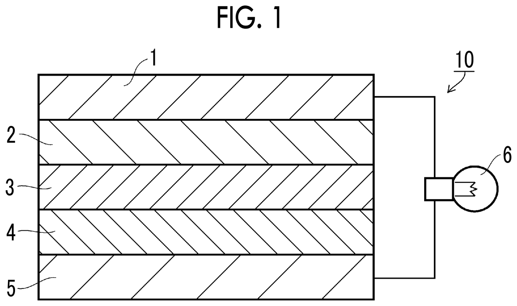

FIG. 1 is a longitudinal cross-sectional view schematically showing a basic lamination configuration of an embodiment of a non-aqueous electrolytic solution secondary battery.

**DESCRIPTION OF THE PREFERRED EMBODIMENTS**

Preferred embodiments of the present invention will be described, but the present invention is not limited to these embodiments except as specified in the present invention.

[Method for manufacturing non-aqueous electrolytic solution secondary battery]

In the method for manufacturing a non-aqueous electrolytic solution secondary battery according to the embodiment of the present invention (also referred to as "manufacturing method according to the embodiment of the present invention"), the non-aqueous electrolytic solution secondary battery to be obtained has a structure in which a positive electrode collector, a positive electrode active material layer, a separator, a negative electrode active material layer, and a negative electrode collector are laminated in this order. The non-aqueous electrolytic solution secondary battery is a so-called semi-solid state secondary battery, and the positive electrode active material layer is a slurry-like positive electrode active material layer formed of a slurry for forming a positive electrode, containing a positive electrode active material, a conductive auxiliary agent, an electrolyte, and a non-aqueous solvent. It is preferable that the negative electrode active material layer of the non-aqueous electrolytic solution secondary battery is also a slurry-like negative electrode active material layer formed of a slurry for forming a negative electrode, containing a negative electrode active material, a conductive auxiliary agent, an electrolyte, and a non-aqueous solvent.

In the manufacturing method according to the embodiment of the present invention, the slurry-like positive electrode active material layer is formed by applying a slurry for forming a positive electrode onto a positive electrode collector, the slurry for forming a positive electrode, containing a positive electrode active material, a conductive auxiliary agent, an electrolyte, and a non-aqueous solvent in which a content of a solvent having a vapor pressure of 4.0 kPa or more is less than 1.0% by mass. A method of applying the slurry in the present invention is not particularly limited, and for example, the slurry can be applied by using a roll coater, drop coating, pressing (roll pressing or flat plate pressing) the slurry after evenly installing the slurry on the collector, or installing the slurry in a frame having a specified thickness and pressing the slurry.

In the present invention, the above-described slurry for forming a positive electrode contains the above-described positive electrode active material at a concentration of 75% by mass or more. As described above, in the step of forming the slurry-like positive electrode active material layer, the slurry for forming a positive electrode does not contain the solvent having a vapor pressure of 4.0 kPa or more, or contains only a small amount of less than 1.0% by mass in the non-aqueous solvent. That is, a highly volatile solvent (low-viscosity solvent) is not substantially contained in the slurry. In this manner, even in a case where the slurry containing the positive electrode active material at a high concentration of 75% by mass or more is used, the positive electrode active material layer having a desired thickness or shape can be formed with high accuracy. In a case where the content of the active material is high, even in a case where the non-aqueous solvent is contained, the property is slightly close to a powder, but such a form is also referred to as "slurry" or "slurry-like" in the present invention. That is, in the present invention, a mixture of solid particles such as the active material and the conductive auxiliary agent and the non-aqueous solvent or the electrolytic solution is expressed as "slurry" or "slurry-like".

In the present invention, the "vapor pressure" means a saturated vapor pressure at normal temperature. That is, it means a vapor pressure at 25°C at a standard atmospheric pressure (0.1 MPa).

The content of the positive electrode active material in the above-described slurry for forming a positive electrode is preferably 76% by mass or more, more preferably 77% by mass or more, still more preferably 78% by mass or more, even more preferably 79% by mass or more, and even still more preferably 80% by mass or more. In addition, the content of the positive electrode active material in the above-described slurry for forming a positive electrode is usually 90% by mass or less, preferably 88% by mass or less, more preferably 86% by mass or less, still more preferably 84% by mass or less, even more preferably 83% by mass or less, and even still more preferably 82% by mass or less. In a case where the content of the positive electrode active material in the above-described slurry for forming a positive electrode is expressed as a preferred range, it is preferably 75% to 90% by mass, more preferably 76% to 88% by mass, still more preferably 77% to 86% by mass, even more preferably 78% to 84% by mass, even still more preferably 79% to 83% by mass, and further more preferably 80% to 82% by mass.

In addition, in the non-aqueous electrolytic solution secondary battery obtained by the manufacturing method according to the embodiment of the present invention, a content of the positive electrode active material in the slurry-like positive electrode active material layer may be slightly reduced by the solvent having a vapor pressure of 4.0 kPa or more to be added, but the amount of reduction is small. Therefore, in the non-aqueous electrolytic solution secondary battery obtained by the manufacturing method according to the embodiment of the present invention, the preferred content of the positive electrode active material in the slurry-like positive electrode active material layer is the same as the preferred content of the positive electrode active material in the slurry for forming a positive electrode.

In the non-aqueous solvent (also referred to as the non-aqueous solvent (I)) constituting the above-described slurry for forming a positive electrode, a content of the solvent having a vapor pressure of 4.0 kPa or more is preferably less than 0.8% by mass, more preferably less than 0.6% by mass, still more preferably less than 0.4% by mass, even more preferably less than 0.2% by mass, even still more preferably less than 0.1% by mass, and further more preferably less than 0.05% by mass. It is particularly preferable that the non-aqueous solvent (I) does not contain the solvent having a vapor pressure of 4.0 kPa or more.

The vapor pressure of the above-described solvent having a vapor pressure of 4.0 kPa or more is usually 80.0 kPa or less, preferably 60.0 kPa or less, and may be 50.0 kPa or less, 40.0 kPa or less, 30.0 kPa or less, or 20.0 kPa or less. Specific examples of the solvent having a vapor pressure of 4.0 kPa or more will be described later.

In the manufacturing method according to the embodiment of the present invention, after forming the above-described slurry-like positive electrode active material, the above-described solvent having a vapor pressure of 4.0 kPa or more is added to the slurry-like positive electrode active material layer. As a result, fluidity of the slurry-like positive electrode active material layer is increased, ion conductivity is improved, and the decrease in discharge capacity during discharge at a high current can be effectively suppressed. The solvent having a vapor pressure of 4.0 kPa or more to be added to the slurry-like positive electrode active material layer preferably has a vapor pressure of 5.0 kPa or more, more preferably 6.0 kPa or more, and still more preferably 7.0 kPa or more. In a case where the vapor pressure of the solvent having a vapor pressure of 4.0 kPa or more to be added to the slurry-like positive electrode active material layer is expressed as a preferred range, it is preferably 4.0 to 80.0 kPa, more preferably 5.0 to 60.0 kPa, still more preferably 6.0 to 50.0 kPa, even more preferably 7.0 to 40.0 kPa, even still more preferably 7.0 to 30.0 kPa, and further more preferably 7.0 to 20.0 kPa.

A method of adding the above-described solvent having a vapor pressure of 4.0 kPa or more to the above-described slurry-like positive electrode active material layer is not particularly limited. For example, after applying the above-described slurry for forming a positive electrode onto the positive electrode collector to form the slurry-like positive electrode active material layer, the above-described solvent having a vapor pressure of 4.0 kPa or more can be directly added to the slurry-like positive electrode active material layer.

In addition, after applying the above-described slurry for forming a positive electrode onto the positive electrode collector to form the slurry-like positive electrode active material layer, the separator can be disposed on the slurry-like positive electrode active material layer, and then the above-described solvent having a vapor pressure of 4.0 kPa or more can be added to the separator. In a case where the above-described solvent having a vapor pressure of 4.0 kPa or more is added to the separator, the solvent having a vapor pressure of 4.0 kPa or more can be diffused into the slurry-like positive electrode active material layer, and as a result, the above-described solvent having a vapor pressure of 4.0 kPa or more can be added to the slurry-like positive electrode active material layer.

In addition, a negative electrode active material layer of the negative electrode can contain the solvent having a vapor pressure of 4.0 kPa or more, and the negative electrode can be superimposed on the laminate of the positive electrode collector, the slurry-like positive electrode active material layer, and the separator. As a result, the solvent having a vapor pressure of 4.0 kPa or more can be diffused into the slurry-like positive electrode active material layer, so that the above-described solvent having a vapor pressure of 4.0 kPa or more can be added to the slurry-like positive electrode active material layer.

In addition, a negative electrode active material layer or a separator in a laminate of the negative electrode and the separator can contain the solvent having a vapor pressure of 4.0 kPa or more, and the laminate can be superimposed on the laminate of the positive electrode collector and the slurry-like positive electrode active material layer. As a result, the solvent having a vapor pressure of 4.0 kPa or more can be diffused into the slurry-like positive electrode active material layer, so that the above-described solvent having a vapor pressure of 4.0 kPa or more can be added to the slurry-like positive electrode active material layer.

In a case where the solvent having a vapor pressure of 4.0 kPa or more is added to the slurry-like positive electrode active material layer, only the solvent having a vapor pressure of 4.0 kPa or more may be added, or the solvent having a vapor pressure of 4.0 kPa or more and other components may be mixed and added. Examples of the other components include an electrolyte and a solvent having a vapor pressure of less than 4.0 kPa. In a case where the solvent having a vapor pressure of 4.0 kPa or more is added to the slurry-like positive electrode active material layer, it is preferable to add the solvent having a vapor pressure of 4.0 kPa or more without being mixed with the other components. The same applies to the addition of the solvent having a vapor pressure of 4.0 kPa or more to the slurry-like negative electrode active material layer, which will be described later.

Even in a case where the solvent having a vapor pressure of 4.0 kPa or more is added to the slurry-like positive electrode active material layer by any of the above-described methods, the solvent having a vapor pressure of 4.0 kPa or more has high volatility, and thus it is preferable to quickly produce a battery in order to suppress volatilization. With regard to the method for manufacturing a non-aqueous electrolytic solution secondary battery, a normal method can be appropriately adopted for steps other than the characteristic step of the present invention. For example, JP2016-201308A, JP2005-108835A, JP2012-185938A, JP2017-147222A, and the like can be appropriately referred to.

In the non-aqueous electrolytic solution secondary battery obtained by the manufacturing method according to the embodiment of the present invention, the content of the solvent having a vapor pressure of 4.0 kPa or more in the non-aqueous solvent constituting the slurry-like positive electrode active material layer (in a case where the entire non-aqueous solvent is set to 100% by mass) is preferably 2.0% to 10.0% by mass, more preferably 3.0% to 9.0% by mass, still more preferably 3.5% to 8.0% by mass, even more preferably 4.0% to 7.0% by mass, and even still more preferably 4.0% to 6.0% by mass.

The content of the solvent having a vapor pressure of 4.0 kPa or more in the non-aqueous solvent can be determined by a normal method. For example, a part of the slurry-like positive electrode active material layer is collected, mixed with an extraction solvent such as chloroform and dimethyl sulfoxide (DMSO), and then the supernatant solution is measured using liquid chromatography, gas chromatography, H-NMR, or the like to be quantified.

In the non-aqueous electrolytic solution secondary battery obtained by the manufacturing method according to the embodiment of the present invention, a contact angle of the solvent having a vapor pressure of 4.0 kPa or more (the solvent having a vapor pressure of 4.0 kPa or more contained in the slurry-like positive electrode active material layer of the non-aqueous electrolytic solution secondary battery, that is, the solvent having a vapor pressure of 4.0 kPa or more added later to the slurry-like positive electrode active material layer in the manufacturing of the non-aqueous electrolytic solution secondary battery) with respect to the above-described separator is preferably 45° or less. The solvent having a vapor pressure of 4.0 kPa or more is generally high in polarity, while the separator is generally low in polarity, such as a polyolefin resin. In a case where the polarity of the separator is low, for example, the contact angle of the above-described solvent having a vapor pressure of 4.0 kPa or more with respect to the separator can be controlled to 45° or less by modifying surface properties of the separator by surface treatment or the like. Examples of the surface treatment method of the separator include ceramic coating treatment (for example, $Al_2O_3$, $TiO_2$, $SiO_2$, zeolite, or the like as a ceramic to be coated; as necessary, coating treatment may be performed together with a binder), surfactant treatment (for example, treatment with polyoxyethylene alkyl ether, polyoxyethylene alkylphenyl ether, polyoxyethylene mono fatty acid ester, polyoxyethylene-modified polydimethylsiloxane, alkyl imidazoline, or the like), plasma treatment, corona discharge treatment, ultraviolet treatment, and acid treatment.

By setting the contact angle of the solvent having a vapor pressure of 4.0 kPa or more with respect to the above-described separator to 45° or less, the battery performance can be further improved. For example, the decrease in discharge capacity during discharge at a high current can be effectively suppressed.

The contact angle of the above-described solvent having a vapor pressure of 4.0 kPa or more with respect to the above-described separator is preferably 5° to 45°, more preferably 10° to 40°, still more preferably 15° to 30°, and also preferably 20° to 30°. The contact angle can be determined by a method described in Examples later.

It is preferable that the manufacturing method according to the embodiment of the present invention includes forming a slurry-like negative electrode active material layer by applying a slurry for forming a negative electrode, containing a negative electrode active material, a conductive auxiliary agent, an electrolyte, and the above-described non-aqueous solvent (I), onto a negative electrode collector. It is more preferable that the manufacturing method according to the embodiment of the present invention further includes adding the solvent having a vapor pressure of 4.0 kPa or more to the slurry-like negative electrode active material layer. A preferred vapor pressure range of the solvent having a vapor pressure of 4.0 kPa or more, which is added to the slurry-like negative electrode active material layer, is the same as the preferred vapor pressure range of the solvent having a vapor pressure of 4.0 kPa or more, which is added to the slurry-like positive electrode active material layer.

A preferred embodiment of the manufacturing method according to the present invention includes: forming a slurry-like negative electrode active material layer by applying a slurry for forming a negative electrode, containing a negative electrode active material, a conductive auxiliary agent, an electrolyte, and the above-described non-aqueous solvent (I), onto a negative electrode collector; separately forming a slurry-like positive electrode active material layer by applying a slurry for forming a positive electrode, containing a positive electrode active material, a conductive auxiliary agent, an electrolyte, and the above-described non-aqueous solvent (I), onto a positive electrode collector; and adding the above-described solvent having a vapor pressure of 4.0 kPa or more to both layers of the slurry-like negative electrode active material layer and the slurry-like positive electrode active material layer. A method of adding the solvent having a vapor pressure of 4.0 kPa or more is not particularly limited, and for example, the above-described method of adding the solvent having a vapor pressure of 4.0 kPa or more to the slurry-like positive electrode active material layer can be appropriately adopted.

A content of the negative electrode active material in the above-described slurry for forming a negative electrode is preferably 50% to 80% by mass, more preferably 55% to 75% by mass, and still more preferably 60% to 70% by mass.

In the non-aqueous electrolytic solution secondary battery obtained by the manufacturing method according to the embodiment of the present invention, the content of the solvent having a vapor pressure of 4.0 kPa or more in the non-aqueous solvent constituting the slurry-like negative electrode active material layer is preferably 2.0% to 10.0% by mass, more preferably 3.0% to 9.0% by mass, still more preferably 3.5% to 8.0% by mass, even more preferably 4.0% to 7.0% by mass, and even still more preferably 4.0% to 6.0% by mass. Since the solvent is uniformly diffused in the laminate consisting of the positive electrode active material layer, the separator, and the negative electrode active material layer, the content of the solvent having a vapor pressure of 4.0 kPa or more in the non-aqueous solvent constituting the slurry-like negative electrode active material layer in the non-aqueous electrolytic solution secondary battery is substantially the same as the content of the solvent having a vapor pressure of 4.0 kPa or more in the non-aqueous solvent constituting the slurry-like positive electrode active material layer.

In addition, in the non-aqueous electrolytic solution secondary battery obtained by the manufacturing method according to the embodiment of the present invention, a content of the negative electrode active material in the slurry-like negative electrode active material layer is slightly reduced by the solvent having a vapor pressure of 4.0 kPa or more to be added, but the amount of reduction is small. Therefore, in the non-aqueous electrolytic solution secondary battery obtained by the manufacturing method according to the embodiment of the present invention, the preferred content of the negative electrode active material in the slurry-like negative electrode active material layer is the same as the preferred content of the negative electrode active material in the slurry for forming a negative electrode.

Both the slurry for forming a positive electrode and the slurry for forming a negative electrode usually contain a conductive auxiliary agent. A content of the conductive auxiliary agent in these slurries is preferably 0.02% to 6.00% by mass, more preferably 0.04% to 4.00% by mass, still more preferably 0.06% to 3.00% by mass, and even more preferably 0.07% to 2.5% by mass.

Subsequently, materials used in the manufacturing method according to the embodiment of the present invention will be described.

<Positive electrode active material>

As the positive electrode active material, a positive electrode active material capable of reversibly intercalating and deintercalating lithium ions is preferable. The material is not particularly limited as long as it exhibits desired electron conductivity, and examples thereof include transition metal oxides, organic matter, substances capable of being complexed with Li, such as sulfur, and complexes of sulfur and metal.

Among these, as the positive electrode active material, lithium-containing transition metal oxides are preferably used, and lithium-containing transition metal oxides having a transition metal element $M^a$ (one or more elements selected from Co, Ni, Fe, Mn, Cu, and V) are more preferable. In addition, an element $M^b$ (an element of Group 1 (Ia) of the periodic table other than lithium, an element of Group 2 (IIa), or an element such as Al, Ga, In, Ge, Sn, Pb, Sb, Bi, Si, P, and B) may be mixed into the lithium-containing transition metal oxide. The mixed amount is preferably 0 to 30 mol% with respect to the amount (100 mol%) of the transition metal element $M^a$. It is more preferable that the transition metal oxide is synthesized by mixing the above-described components such that a molar ratio $Li/M^a$ is 0.3 to 2.2.

Specific examples of the lithium-containing transition metal oxide include (MA) lithium-containing transition metal oxides having a bedded salt-type structure, (MB) lithium-containing transition metal oxides having a spinel-type structure, (MC) lithium-containing transition metal phosphoric acid compounds, (MD) lithium-containing transition metal halogenated phosphoric acid compounds, and (ME) lithium-containing transition metal silicate compounds.

Specific examples of the lithium-containing transition metal oxide having a bedded salt-type structure (MA) include $LiCoO_2$ (lithium cobalt oxide [LCO]), $LiNi_2O_2$ (lithium nickelate), $LiNi_{0.85}Co_{0.10}Al_{0.05}O_2$ (lithium nickel cobalt aluminum oxide [NCA]), $LiNi_{1/3}Co_{1/3}Mn_{1/3}O_2$ (lithium nickel manganese cobalt oxide [NMC]), and $LiNi_{0.5}Mn_{0.5}O_2$ (lithium manganese nickelate).

Specific examples of the lithium-containing transition metal oxide having a spinel-type structure (MB) include $LiMn_2O_4$ (LMO), $LiCoMnO_4$, $Li_2FeMn_3O_8$, $Li_2CuMn_3O_8$, $Li_2CrMn_3O_8$, and $Li_2NiMn_3O_8$.

Examples of the lithium-containing transition metal phosphoric acid compound (MC) include olivine-type iron phosphate salts such as $LiFePO_4$ and $Li_3Fe_2(PO_4)_3$; cobalt phosphates such as $LiCoPO_4$; iron pyrophosphates such as $LiFeP_2O_7$; and monoclinic NASICON-type vanadium phosphate salts such as $Li_3V_2(PO_4)_3$ (lithium vanadium phosphate).

Examples of the lithium-containing transition metal halogenated phosphoric acid compound (MD) include iron fluorophosphates such as $Li_2FePO_4F$, manganese fluorophosphates such as $Li_2MnPO_4F$, and cobalt fluorophosphates

such as $Li_2CoPO_4F$.

Examples of the lithium-containing transition metal silicate compound (ME) include $Li_2FeSiO_4$, $Li_2MnSiO_4$, and $Li_2CoSiO_4$.

In the present invention, the positive electrode active material is preferably the lithium-containing transition metal phosphoric acid compound (MC), and more preferably $LiFePO_4$.

A shape of the positive electrode active material is not particularly limited, but is preferably a particulate shape.

An average particle diameter (sphere-equivalent average particle diameter) of the positive electrode active material is not particularly limited. For example, the average particle diameter can be 0.1 to 50 $\mu$m, preferably 0.2 to 30 $\mu$m, more preferably 0.5 to 20 $\mu$m, and still more preferably 0.8 to 10 $\mu$m.

In order to allow the positive electrode active material to have a predetermined particle diameter, a typical pulverizer or classifier may be used. A positive electrode active material obtained using a baking method may be used after being washed with water, an acidic aqueous solution, an alkaline aqueous solution, or an organic solvent.

In a case where a commercially available positive electrode active material is used, the average particle diameter of the positive electrode active material is adopted as the value described in the catalog of the manufacturer.

In a case where the information on the average particle diameter of the manufacturer cannot be obtained or in a case where a synthesized positive electrode active material is used, the average particle diameter value (volume-based median diameter D50 in water) obtained by dispersing the positive electrode active material in water and measuring the particle diameter with a laser diffraction/scattering-type particle size distribution analyzer (for example, Particle LA-960V2 manufactured by HORIBA, Ltd.) is adopted. The same applies to an average particle diameter of solid particles other than the positive electrode active material.

A chemical formula of a compound obtained by the above-described baking method can be calculated using an inductively coupled plasma (ICP) emission spectroscopy as a measuring method from the mass difference of powder before and after baking as a convenient method.

A surface of the positive electrode active material may be coated with an oxide such as another metal oxide and a carbon-based material. These surface coating layers can function as an interface resistance-stabilizing layer.

Examples of a surface coating material include a metal oxide containing Ti, Nb, Ta, W, Zr, Al, Si, or Li. Examples thereof include titanium oxide spinel, tantalum-based oxides, niobium-based oxides, and lithium niobate-based compounds; and specific examples thereof include $Li_4Ti_5O_{12}$, $Li_2Ti_2O_5$, $LiTaO_3$, $LiNbO_3$, $LiAlO_2$, $Li_2ZrO_3$, $Li_2WO_4$, $Li_2TiO_3$, $Li_2B_4O_7$, $Li_3PO_4$, $Li_2MoO_4$, $Li_3BO_3$, $LiBO_2$, $Li_2CO_3$, $Li_2SiO_3$, $SiO_2$, $TiO_2$, $ZrO_2$, $Al_2O_3$, $B_2O_3$, and $Li_3AlF_6$. In addition, a carbon-based material such as C, SiC, and SiOC (carbon-added silicon oxide) can also be used as the surface coating material.

From the viewpoint of increasing electron conductivity to a desired level, the positive electrode active material may be coated with the carbon-based material. In this case, it is preferable that the surface of the positive electrode active material is coated with carbon (C). The surface coating with carbon can be formed by firing the positive electrode active material in the presence of an additive (organic substance) serving as a carbon source. As the additive, for example, a styrene-maleic acid anhydride copolymer, polystyrene, polycarbonate, or the like can be used.

In addition, the surface of the positive electrode active material may be subjected to a surface treatment with sulfur or phosphorus.

Furthermore, a surface treatment may be carried out on surfaces of particles of the positive electrode active material with an actinic ray or an active gas (plasma or the like) before or after the coating of the surfaces.

One kind of the above-described positive electrode active material may be used alone, or two or more kinds thereof may be used in combination.

In the positive electrode active material layer, a content of the positive electrode active material in the total content of the positive electrode active material and the conductive auxiliary agent is preferably 95.00% to 99.95% by mass, more preferably 96.00% to 99.90% by mass, and still more preferably 97.00% to 99.80% by mass.

<Negative electrode active material>

As the negative electrode active material, a negative electrode active material capable of reversibly intercalating and deintercalating lithium ions is preferable. The material is not particularly limited as long as the material has desired characteristics, and examples thereof include a carbonaceous material, a silicon-based material, a metal oxide, a metal composite oxide, lithium, a lithium alloy, and a negative electrode active material capable of forming an alloy with lithium. Among these, in view of reliability, a carbonaceous material or a silicon-based material is preferably used.

The carbonaceous material used as the negative electrode active material is a material substantially consisting of carbon. Examples thereof include carbon black such as petroleum pitch, graphite (natural graphite and artificial graphite such as vapor-grown graphite), and carbonaceous material obtained by baking various synthetic resins such as a polyacrylonitrile (PAN)-based resin and a furfuryl alcohol resin. Furthermore, examples thereof also include various carbon fibers such as PAN-based carbon fiber, cellulose-based carbon fiber, pitch-based carbon fiber, vapor-grown carbon fiber, dehydrated polyvinyl alcohol (PVA)-based carbon fiber, lignin carbon fiber, vitreous carbon fiber, and activated carbon fiber; mesophase microspheres, graphite whisker, and tabular graphite.

The metal oxide and the metal composite oxide, used as the negative electrode active material, are not particularly limited as long as they are oxides capable of intercalating and deintercalating lithium, and are preferably noncrystalline oxides. Preferred examples thereof also include chalcogenide which is a reaction product of a metal element and a Group 16 element of the periodic table. The "noncrystalline" herein means an oxide having a broad scattering band with an apex in a range of 20° to 40° in terms of the 20 value in case of being measured by an X-ray diffraction method using a $CuK\alpha$ ray, and the oxide may have a crystalline diffraction line.

In the noncrystalline oxides and the chalcogenides described above, the noncrystalline oxide of a metalloid element or the above-described chalcogenide is more preferable; and an oxide consisting of one element or a combination of two or more elements selected from elements (Al, Ga, Si, Sn, Ge, Pb, Sb, and Bi) of Group 13 (IIIB) to Group 15 (VB) of the periodic table or the chalcogenide is particularly preferable. Specific examples of the preferred noncrystalline oxide and chalcogenide preferably include $Ga_2O_3$, $GeO$, $PbO$, $PbO_2$, $Pb_2O_3$, $Pb_2O_4$, $Pb_3O_4$, $Sb_2O_3$, $Sb_2O_4$, $Sb_2O_8Bi_2O_3$, $Sb_2O_8Si_2O_3$, $Sb_2O_5$, $Bi_2O_3$, $Bi_2O_4$, $GeS$, $PbS$, $PbS_2$, $Sb_2S_3$, and $Sb_2S_5$.

From the viewpoint of charge and discharge characteristics at a high current density, it is preferable that the metal (composite) oxide and the chalcogenide contain at least one of titanium or lithium as a constitutional component. Examples of the metal composite oxide (lithium composite metal oxide) including lithium include a composite oxide of lithium oxide and the above metal (composite) oxide or the above chalcogenide, and specifically, $Li_2SnO_2$.

It is also preferable that the negative electrode active material contains a titanium atom. More specifically, $TiNb_2O_7$ (niobium titanium oxide [NTO]) or $Li_4Ti_5O1_2$ (lithium titanate [LTO]), which undergoes a slight volume change in intercalating and deintercalating lithium ions, is preferable because these compounds exhibit excellent high-speed charging and discharging characteristics, suppress the deterioration of an electrode, and can increase the life of a lithium ion secondary battery.

The lithium alloy as the negative electrode active material is not particularly limited as long as it is typically used as a negative electrode active material for a secondary battery, and examples thereof include a lithium aluminum alloy.

The negative electrode active material capable of forming an alloy with lithium is not particularly limited as long as it is typically used as a negative electrode active material for a secondary battery. Such an active material has a large expansion and contraction due to charging and discharging, and the bonding property of the solid particles is reduced as described above; but in the present invention, high bonding property can be achieved by the above-described binder. Examples of such an active material include negative electrode active materials having a silicon atom or a tin atom, and respective metals such as Al, In, and the like; and a negative electrode active material having a silicon atom which achieves a higher battery capacity (silicon atom-containing active materials) is preferable, and a silicon atom-containing active material having a silicon atom content of 40 mol% or more of all constituent atoms is more preferable.

Generally, a negative electrode containing these negative electrode active materials (for example, an Si negative electrode containing a silicon atom-containing active material and an Sn negative electrode containing a tin atom-containing active material) can absorb a larger amount of Li ions than carbon negative electrodes (such as graphite and acetylene black). That is, the amount of Li ions absorbed per unit mass increases. Therefore, the battery capacity (energy density) can be increased. As a result, there is an advantage in that the battery driving duration can be extended.

Examples of the silicon atom-containing active material include a silicon material such as Si and SiOx $(0 < x \leq 1)$, an alloy containing titanium, vanadium, chromium, manganese, nickel, copper, or lanthanum (for example, $LaSi_2$ and $VSi_2$), a structured active material (for example, LaSi2/Si), and an active material containing a silicon atom and a tin atom, such as $SnSiO_3$ and $SnSiS_3$. Since SiOx itself can be used as the negative electrode active material (the metalloid oxide) and Si is produced along with the operation of the battery, SiOx can be used as an active material (or a precursor material thereof) capable of forming an alloy with lithium.

Examples of the negative electrode active materials having a tin atom include Sn, SnO, $SnO_2$, SnS, $SnS_2$, and active materials containing the above-described silicon atom and a tin atom. In addition, examples thereof include a composite oxide with lithium oxide, for example, $Li_2SnO_2$.

A shape of the negative electrode active material is not particularly limited, but is preferably a particle shape. An average particle diameter of the negative electrode active material is preferably 0.1 to 60 $\mu$m. In order to have a predetermined particle diameter, a typical pulverizer or classifier is used. For example, a mortar, a ball mill, a sand mill, a vibratory ball mill, a satellite ball mill, a planetary ball mill, a vortex airflow-type jet mill, a sieve, or the like is suitably used. During the pulverization, wet pulverization of causing water or an organic solvent such as methanol to coexist with the negative electrode active material can be performed. In order to provide the desired particle diameter, classification is preferably performed. The classification method is not particularly limited, and a sieve, an air classifier, or the like can be used as desired. Both a dry-type classification and a wet-type classification can be used.

One kind of the above-described negative electrode active material may be used alone, or two or more kinds thereof may be used in combination. Among these, a combination of the silicon atom-containing active material and the carbonaceous material is preferable, and a combination of SiOx $(0 < x \leq 1)$ and graphite is particularly preferable. A mass ratio (SiOx/graphite) in a case of combining SiOx ($0 < x \le 1$) and graphite is preferably 2 or less, more preferably 1 or less, and still more preferably 0.5 or less.

In a case of forming the negative electrode active material layer, a mass (mg) of the negative electrode active material per unit area ($cm^2$) of the negative electrode active material layer (mass per unit area) is not particularly limited. The mass per unit area can be appropriately determined depending on the designed battery capacity.

In the negative electrode active material layer, a content of the negative electrode active material in the total content of the negative electrode active material and the conductive auxiliary agent is preferably 95.00% to 99.95% by mass, more preferably 96.00% to 99.90% by mass, and still more preferably 97.00% to 99.80% by mass.

<Conductive auxiliary agent>

The above-described slurry contains a conductive auxiliary agent. The conductive auxiliary agent is not particularly limited, a conductive auxiliary agent which is known as a general conductive auxiliary agent can be used. For example, the conductive auxiliary agent may be graphite such as natural graphite and artificial graphite; carbon black such as acetylene black, ketjen black, and furnace black; irregular carbon such as needle cokes; a carbon fiber such as vapor-grown carbon fiber and carbon nanotube; a carbonaceous material such as graphene and fullerene which are electron-conductive materials; metal powder or a metal fiber of copper, nickel, or the like; and a conductive polymer such as polyaniline, polypyrrole, polythiophene, polyacetylene, and a polyphenylene derivative.

In a case where the electrode active material and the conductive auxiliary agent are used in combination, among the above-described conductive auxiliary agents, a conductive auxiliary agent which does not intercalate and deintercalate Li and does not function as an active material at the time of charging and discharging a battery is regarded as the conductive auxiliary agent. Therefore, among the conductive auxiliary agents, a conductive auxiliary agent which can function as the active material in the active material layer at the time of charging and discharging of the battery is classified as the active material, not as the conductive auxiliary agent. Whether or not the conductive auxiliary agent functions as the active material at the time of charging and discharging of the battery is not unambiguously determined, and determined by a combination with the active material.

One kind of conductive auxiliary agent or two or more kinds of conductive auxiliary agents may be used.

A shape of the conductive auxiliary agent is not particularly limited, but is preferably a particulate shape.

An average particle diameter (sphere-equivalent average particle diameter) of the conductive auxiliary agent is not particularly limited. For example, the average particle diameter is preferably 0.01 to 50 $\mu$m, more preferably 0.1 to 10 $\mu$m, and still more preferably 0.2 to 2.0 $\mu$m.

In any of the positive electrode active material layer or the negative electrode active material layer, a content of the conductive auxiliary agent in the total content of the active material and the conductive auxiliary agent is preferably 0.05% to 7.00% by mass, more preferably 0.05% to 5.00% by mass, still more preferably 0.10% to 4.00% by mass, and even more preferably 0.20% to 3.00% by mass.

<Non-aqueous electrolytic solution>

In the present invention, the slurry for forming a positive electrode and the slurry-like positive electrode active material layer contain a non-aqueous electrolytic solution. The non-aqueous electrolytic solution is composed of an electrolyte (electrolyte salt) and a non-aqueous solvent which dissolves the electrolyte.

(Electrolyte)

As the electrolyte, an electrolyte which can be used for the electrolytic solution of the semi-solid-state secondary battery can be appropriately used. The electrolyte is preferably a metal salt, and examples thereof include a lithium salt, a potassium salt, a sodium salt, a calcium salt, and a magnesium salt.

As the lithium salt, a lithium salt which is usually used for an electrolyte of a lithium ion secondary battery is preferable, and examples thereof include the following lithium salts.

(L-1) Inorganic lithium salt: inorganic fluoride salt such as $LiPF_6$, $LiBF_4$, $LiAsF_6$, and $LiSbF_6$; perhalogenate such as $LiClO_4$, $LiBrO_4$, and $LiIO_4$; an inorganic chloride salt such as $LiAlCl_4$; and the like

(L-2) Fluorine-containing organic lithium salt: perfluoroalkane sulfonate such as $LiCF_3SO_3$; perfluoroalkane-sulfonylimide salt such as $LiN(CF_3SO_2)_2$, $LiN(CF_3CF_2SO_2)_2$, $LiN(FSO_2)_2$, and $LiN(CF_3SO_2)(C_4F_9SO_2)$; perfluoroalkane sulfonylmethide salt such as $LiC(CF_3SO_2)_3$; fluoroalkyl fluorophosphate such as $Li[PF_5(CF_2CF_2CF_3)]$, $Li[PF_4(CF_2CF_2CF_3)_2]$, $Li[PF_3(CF_2CF_2CF_3)_3]$, $Li[PF5(CF_2CF_2CF_3)]$, $Li[PF_4(CF_2CF_2CF_3)_2]$, and $Li[PF_3(CF_2CF_2CF_3)_3]$; and the like

(L-3) Oxalatoborate salt: lithium bis(oxalato)borate, lithium difluorooxalatoborate, and the like

Among these, $LiPF_6$, $LiBF_4$, $LiAsF_6$, $LiSbF_6$, $LiClO_4$, $Li(R^{f1}SO_3)$, $LiN(R^{f1}SO_2)_2$, $LiN(FSO_2)_2$, or $LiN(R^{f1}SO_2)$

($R^{f2}SO_2$) is preferable; $LiPF_6$, $LiBF_4$, $LiN(R^{f1}SO_2)_2$, $LiN(FSO_2)_2$, or $LiN(R^{f1}SO_2)(R^{f2}SO_2)$ is more preferable; and $LiPF_6$ is particularly preferable. Here, $R^{f1}$ and $R^{f2}$ each represent a perfluoroalkyl group, and the number of carbon atoms in the perfluoroalkyl group is preferably 1 to 6.

In the non-aqueous electrolytic solution, the electrolyte may be used alone or in combination of two or more kinds thereof.

In the slurry for forming a positive electrode and the slurry-like positive electrode active material layer, a concentration of the electrolyte in the non-aqueous electrolytic solution is not particularly limited as long as it functions as the non-aqueous electrolytic solution. It can be set to, for example, 10.0% to 50.0% by mass, preferably 15.0% to 30.0% by mass. A molar concentration thereof is preferably 0.5 to 1.5 M.

(Non-aqueous solvent)

As the non-aqueous solvent which is the solvent of the non-aqueous electrolytic solution, aprotic organic solvents are preferable; and among these, an aprotic organic solvent having 2 to 10 carbon atoms is more preferable.

Examples of such a non-aqueous solvent include a chain-like or cyclic carbonate compound, a lactone compound, a chain-like or cyclic ether compound, an ester compound, a nitrile compound, an amide compound, an oxazolidinone compound, a nitro compound, a chain-like or cyclic sulfone or sulfoxide compound, and a phosphoric acid ester compound.

Among these, a compound having an ether bond, a carbonyl bond, an ester bond, or a carbonate bond is preferable. These compounds may have a substituent.

Examples of the solvent having a vapor pressure of 4.0 kPa or more (non-aqueous solvent) described above include isobutyronitrile (4370 Pa), ethyl propionate (5333 Pa), propanenitrile (6314 Pa), dimethoxymethane (6394 Pa), dimethyl carbonate (7381 Pa), acetonitrile (11839 Pa), 2-methyltetrahydrofuran (13600 Pa), tetrahydrofuran (21600 Pa), methyl acetate (23100 Pa), and diethyl ether (58600 Pa); and one or two or more of these solvents can be used. The value of the vapor pressure is described in the above parentheses. The same applies to the following.

From the viewpoint of reducing the viscosity of the electrolytic solution, the solvent having a vapor pressure of 4.0 kPa or more is preferably selected from acetonitrile, dimethyl carbonate, and diethyl ether, more preferably selected from acetonitrile or dimethyl carbonate, and particularly preferably acetonitrile.

Examples of the solvent having a vapor pressure of less than 4.0 kPa (non-aqueous solvent) include sulfolane (0.8 Pa), adiponitrile (0.9 Pa), biphenyl (1.2 Pa), ethylene carbonate (1.3 Pa), propylene carbonate (4.0 Pa), N-methylpyrrolidone (46 Pa), fluoroethylene carbonate (51 Pa), γ-butyrolactone (60 Pa), dimethyl sulfoxide (80 Pa), benzonitrile (102 Pa), vinylene carbonate (335 Pa), diglyme (395 Pa), β-propiolactone (453 Pa), diethyl carbonate (1439 Pa), and ethyl methyl carbonate (3600 Pa); and one or two or more of these solvents can be used.

From the viewpoint of reducing the viscosity of the electrolytic solution, as the solvent having a vapor pressure of less than 4.0 kPa, it is preferable to use one or two or more selected from ethylene carbonate, propylene carbonate, and ethyl methyl carbonate.

In the present invention, a content of the non-aqueous electrolytic solution in the slurry for forming a positive electrode is preferably 8% to 23% by mass, more preferably 10% to 22% by mass, still more preferably 12% to 21% by mass, even more preferably 14% to 20% by mass, even still more preferably 15% to 19% by mass, and particularly preferably 16% to 18% by mass.

In addition, in the non-aqueous electrolytic solution secondary battery obtained by the manufacturing method according to the embodiment of the present invention, a content of the non-aqueous electrolytic solution in the slurry-like positive electrode active material layer may be slightly increased by the solvent having a vapor pressure of 4.0 kPa or more to be added, but the amount of increase is small. Therefore, in the non-aqueous electrolytic solution secondary battery obtained by the manufacturing method according to the embodiment of the present invention, the preferred content of the non-aqueous electrolytic solution in the slurry-like positive electrode active material layer is the same as the preferred content of the non-aqueous electrolytic solution in the slurry for forming a positive electrode.

In the present invention, a negative electrode generally used in a non-aqueous electrolytic solution secondary battery can be used as the negative electrode without particular limitation.

In the present invention, the negative electrode is preferably a laminate of the negative electrode collector and the slurry-like negative electrode active material layer as described above. In this case, the slurry for forming a negative electrode and the slurry-like negative electrode active material layer contain a non-aqueous electrolytic solution. The non-aqueous electrolytic solution described as the non-aqueous electrolytic solution which can be contained in the slurry for forming a positive electrode and the slurry-like positive electrode active material layer above can be preferably used as the non-aqueous electrolytic solution of the slurry for forming a negative electrode and the slurry-like negative electrode active material layer.

In the present invention, a content of the non-aqueous electrolytic solution in the above-described slurry for forming a negative electrode is preferably 18% to 48% by mass, more preferably 23% to 43% by mass, and still more preferably 28% to 38% by mass.

In addition, in the non-aqueous electrolytic solution secondary battery obtained by the manufacturing method according to the embodiment of the present invention, a content of the non-aqueous electrolytic solution in the above-described slurry-like negative electrode active material layer may be slightly increased by the solvent having a vapor pressure of 4.0 kPa or more to be added, but the amount of increase is small. Therefore, in the non-aqueous electrolytic solution secondary battery obtained by the manufacturing method according to the embodiment of the present invention, the preferred content of the non-aqueous electrolytic solution in the slurry-like negative electrode active material layer is the same as the preferred content of the non-aqueous electrolytic solution in the slurry for forming a negative electrode.

<Other components>

The slurry for forming a positive electrode and the slurry for forming a negative electrode described above can contain, as desired, an ionic liquid, a thickener, an antifoaming agent, a leveling agent, a dehydrating agent, an antioxidant, or the like. These components can be used as those which are usually used in the non-aqueous electrolytic solution secondary battery.

In a case where the slurry for forming a positive electrode and/or the slurry for forming a negative electrode described above contains other components, a content of the other components is preferably 0.05 to 1.5 parts by mass and more preferably 0.1 to 1.0 parts by mass with respect to 100 parts by mass of the total content of the active material and the conductive auxiliary agent.

The slurry for forming a positive electrode and the slurry for forming a negative electrode described above can be obtained by uniformly mixing the respective components constituting the slurry. The mixing method is not particularly limited, and a method commonly used in the technical field can be appropriately adopted.

[Non-aqueous electrolytic solution secondary battery]

The non-aqueous electrolytic solution secondary battery according to the embodiment of the present invention (hereinafter, also referred to as "secondary battery according to the embodiment of the present invention") is a non-aqueous electrolytic solution secondary battery obtained by the manufacturing method according to the embodiment of the present invention. That is, the secondary battery according to the embodiment of the present invention is a so-called semi-solid state secondary battery in which a positive electrode collector, a positive electrode active material layer, a separator, a negative electrode active material layer, and a negative electrode collector are provided in this order, and at least the positive electrode active material layer is in a slurry state. In the secondary battery according to the embodiment of the present invention, it is preferable that both the positive electrode active material layer and the negative electrode active material layer are in a slurry state.

Before the description of the secondary battery according to the embodiment of the present invention, a structure of a general non-aqueous electrolytic solution secondary battery will be described.

FIG. 1 is a schematic cross-sectional view showing a laminated structure of a general non-aqueous electrolytic solution secondary battery 10, including a working electrode which acts in a case where the battery is operated. The non-aqueous electrolytic solution secondary battery 10 has a laminated structure (hereinafter, also referred to as an electrode laminate) in which a negative electrode collector 1, a negative electrode active material layer 2, a separator 3, a positive electrode active material layer 4, and a positive electrode collector 5 are laminated in this order from the negative electrode side. The negative electrode active material layer 2, the positive electrode active material layer 4, and a space therebetween are filled with a non-aqueous electrolytic solution (not shown), and are separated by the separator 3. The separator 3 has pores, and functions as a positive and negative electrode-separating membrane which insulates the positive electrode and the negative electrode from each other while allowing transmission of the electrolytic solution and ions into the pores in a state in which a typical battery is used. With such a structure, for example, in a case of the lithium ion secondary battery, during charge, while electrons ($e^-$) are supplied to the negative electrode side through an external circuit, lithium ions ($Li^+$) move from the positive electrode through the electrolytic solution and are accumulated in the negative electrode. On the other hand, during discharge, while the lithium ions ($Li^+$) accumulated in the negative electrode are returned to the positive electrode side through the electrolytic solution, electrons are supplied to an operation portion 6. In the example shown in the drawing, a light bulb is adopted as the operation portion 6, which is turned on by the discharge.

Subsequently, a basic configuration characteristic of the semi-solid state secondary battery will be described. As described above, in the semi-solid state secondary battery, the active material layer of the positive electrode and/or the negative electrode is formed in a slurry state containing an active material and an electrolytic solution. Therefore, the secondary battery according to the embodiment of the present invention is different from a general non-aqueous electrolytic solution secondary battery in terms of the fact that the active material layer of the positive electrode and/or the negative electrode is a layer formed of a slurry (suspension or dispersion liquid) obtained by dispersing the electrode active material in a non-aqueous electrolytic solution.

That is, in a general non-aqueous electrolytic solution secondary battery, a coating liquid is prepared in which the active material is dispersed in a medium containing no electrolyte, the coating liquid is applied onto a collector to form a coating film, and then the coating film is dried to form a thin film-shaped active material layer. The coating liquid is usually blended with a binding material (binder), and a hard active material layer in which active material particles are firmly bound to each other is formed. Since the non-aqueous electrolytic solution is present on the active material layer formed in this way (between the negative electrode active material layer and the positive electrode active material layer), the active material layer is in a state of a hard solid particle layer as a whole even in a case where there is a portion in which the non-aqueous electrolytic solution can permeate, and is not a slurry.

On the other hand, in the semi-solid state secondary battery, the active material layer of the positive electrode and/or the negative electrode is a slurry-like layer (slurry layer) obtained by dispersing the solid particles containing the active material and the conductive auxiliary agent in the non-aqueous electrolytic solution which is obtained by dissolving the electrolyte such as a lithium salt in the non-aqueous solvent. In a case where the slurry layer functions as the active material layer, a strong bonding property is not required between the active material particles, and thus the slurry layer generally does not contain a binding material. The basic layer configuration of the semi-solid state secondary battery is the same as the layer configuration shown in FIG. 1, except that the active material layer of the positive electrode and/or the negative electrode is the slurry layer and the slurry layer and the separator are in contact with each other.

In the secondary battery according to the embodiment of the present invention, at least the positive electrode active material layer is the slurry layer. In the secondary battery according to the embodiment of the present invention, it is preferable that both the positive electrode active material layer and the negative electrode active material layer are the slurry layer.

In the secondary battery according to the embodiment of the present invention, a thickness of the slurry-like active material layer (slurry layer) is not particularly limited, and for example, can be set to 5 to 500 $\mu$m, preferably 20 to 400 $\mu$m, more preferably 40 to 400 $\mu$m, still more preferably 80 to 350 even more preferably 120 to 350 $\mu$m, and even still more preferably 150 to 340 $\mu$m.

Each material and member, such as the positive electrode collector, the negative electrode collector, and the separator, in the secondary battery according to the embodiment of the present invention is not particularly limited. As these materials, members, and the like, those used for a typical non-aqueous electrolytic solution secondary battery can be appropriately adopted. For the members and the manufacturing methods which are usually used for these secondary batteries, for example, JP2016-201308A, JP2005-108835A, JP2012-185938A, WO2018/135395A, and the like can be appropriately referred to.

In addition, as described above, it is preferable that the separator is treated on the surface thereof to improve wettability with the non-aqueous solvent which is a medium of the non-aqueous electrolytic solution.

The non-aqueous electrolytic solution secondary battery according to the embodiment of the present invention can be mounted on electronic apparatuses such as such as notebook computers, pen-input personal computers, mobile PCs, e-book players, mobile phones, cordless telephone handsets, pagers, handheld terminals, portable fax machines, portable copiers, portable printers, personal stereos, camcorders, LCD televisions, handheld vacuum cleaners, portable CD players, MiniDisc players, electric shavers, transceivers, electronic organizers, calculators, memory cards, portable tape recorders, radios, backup power supplies, and memory cards. In addition, in a case of being used for consumer applications, the non-aqueous electrolytic solution secondary battery according to the embodiment of the present invention can be mounted on an automobile, an electric vehicle, a motor, a lighting instrument, a toy, a game device, a road conditioner, a watch, a strobe, a camera, a medical device (a pacemaker, a hearing aid, a shoulder massage device, and the like), or the like. Furthermore, the non-aqueous electrolytic solution secondary can be used for various military usages and universe usages. In addition, the secondary battery according to the embodiment of the present invention can also be combined with a solar battery.

Hereinafter, the present invention will be described in more detail with reference to Examples. The present invention is not interpreted as being limited thereto.

Examples

[Preparation of slurry for forming positive electrode]

<Preparation of non-aqueous electrolytic solution (i)>

Ethylene carbonate (EC)/propylene carbonate (PC)/ethyl methyl carbonate (EMC) = 30/40/30 (mass ratio) were mixed with each other to prepare a non-aqueous solvent (I). The non-aqueous solvent (I) and $LiPF_6$ were mixed to obtain a non-aqueous electrolytic solution (i). A concentration of $LiPF_6$ in the non-aqueous electrolytic solution (i) was set to 1.1 M (mol/liter).

<Preparation of non-aqueous electrolytic solution (ii)>

Ethylene carbonate (EC)/propylene carbonate (PC)/ethyl methyl carbonate (EMC)/acetonitrile (AN) = 27/36/27/10 (mass ratio) were mixed with each other to prepare a non-aqueous solvent (II). The non-aqueous solvent and $LiPF_6$ were mixed to obtain a non-aqueous electrolytic solution (ii). A concentration of $LiPF_6$ in the non-aqueous electrolytic solution (ii) was set to 1.0 M (mol/liter).

<Preparation of slurry (a) for positive electrode>

80% by mass of $LiFePO_4$ (manufactured by Gelon Lib Group Co., Ltd.) as a positive electrode active material, 2% by mass of acetylene black (Denka Black manufactured by Denka Company Limited) as a conductive auxiliary agent, and 18% by mass of the above-described non-aqueous electrolytic solution (i) were uniformly mixed using a centrifugal planetary mixer (manufactured by THINKY CORPORATION, trade name: Awatori Nentaro) to obtain a slurry (a) for forming a positive electrode.

<Preparation of slurry (b) for positive electrode>

A slurry (b) for forming a positive electrode was obtained in the same manner as in the preparation of the slurry (a) for forming a positive electrode, except that lithium nickel manganese cobalt oxide (NMC) was used instead of $LiFePO_4$ as the positive electrode active material.

<Preparation of slurry (c) for positive electrode>

A slurry (c) for forming a positive electrode was obtained in the same manner as in the preparation of the slurry (a) for forming a positive electrode, except that the content of the positive electrode active material was set to 78% by mass and the above-described non-aqueous electrolytic solution (i) was set to 20% by mass.

<Preparation of slurry (d) for positive electrode>

A slurry (d) for forming a positive electrode was obtained in the same manner as in the preparation of the slurry (a) for forming a positive electrode, except that the content of the positive electrode active material was set to 82% by mass and the above-described non-aqueous electrolytic solution (i) was set to 16% by mass.

<Preparation of slurry (e) for positive electrode>

A slurry (e) for forming a positive electrode was obtained in the same manner as in the preparation of the slurry (a) for forming a positive electrode, except that the above-described non-aqueous electrolytic solution (ii) was used instead of the above-described non-aqueous electrolytic solution (i).

<Preparation of slurry (f) for positive electrode>

A slurry (f) for forming a positive electrode was obtained in the same manner as in the preparation of the slurry (e) for forming a positive electrode, except that the content of the positive electrode active material was set to 65% by mass and the above-described non-aqueous electrolytic solution (ii) was set to 33% by mass.

[Test Example 1: Test for collapse of slurry-like positive electrode active material layer]

The slurry for forming a positive electrode was applied onto an aluminum collector disposed horizontally such that a thickness was 300 $\mu$m and the shape in a plan view was a square of 4 cm $\times$ 4 cm, thereby producing a positive electrode consisting of the aluminum collector and a slurry-like positive electrode active material layer. In this case, an area of the slurry-like positive electrode active material layer was 4 cm $\times$ 4 cm = 16 cm$^2$.

The positive electrode was placed on an adsorption plate disposed horizontally such that the aluminum collector was in contact with the adsorption plate, and the adsorption plate was rotated by 90° in a state in which the positive electrode was adsorbed and fixed such that a plane direction (two opposite sides of the above-described square) of the slurry-like positive electrode active material layer was in a vertical direction (direction of gravitational force). After holding the state for 1 minute, the adsorption plate was returned to the horizontal position, and an area X cm$^2$ of the slurry-like positive electrode active material layer was measured. A rate of change in area was calculated by the following expression, and the calculated value was applied to the following evaluation standard to evaluate collapse of the slurry-like positive electrode active material layer. The results are shown in the table below.

In the following expression, numerical values between two "|" are absolute values. In a case where the slurry-like positive electrode active material layer collapsed, a part of the slurry-like positive electrode active material layer protruded in the vertical direction so that the area of the slurry-like positive electrode active material layer was expanded, or the protruding part of the slurry-like positive electrode active material layer fell off so that the slurry-like positive electrode active material layer had a defect, and as a result, the rate of change in area was increased.

$$\text{Rate of change in area (\%)} = [|(\text{Area X cm}^2 - 16 \text{ cm}^2)|/16 \text{ cm}^2] \times 100$$

-Evaluation standard-

A: less than 0.5%
B: 0.5% or more and less than 1.0%
C: 1.0% or more and less than 2.0%
D: 2.0% or more and less than 3.0%
E: 3.0% or more and less than 4.0%
F: 4.0% or more and less than 5.0%
G: 5.0% or more

[Preparation of slurry for forming negative electrode]

64% by mass of artificial graphite (UF-G30 manufactured by Showa Denko K.K.) as a negative electrode active material, 1% by mass of acetylene black (Denka Black manufactured by Denka Company Limited) as a conductive auxiliary agent, and 35% by mass of the above-described non-aqueous electrolytic solution (i) were uniformly mixed using a centrifugal planetary mixer (manufactured by THINKY CORPORATION, trade name: Awatori Nentaro) to obtain a slurry for forming a negative electrode.

[Surface treatment of separator]

<Ceramic coating treatment>

A solution containing 5% by mass of $Al_2O_3$, 0.5% by mass of styrene butadiene rubber (SBR), and 94.5% by mass of ethanol was prepared, the solution was applied onto the entire surface of a polyethylene (PE) separator having a void ratio of 45% and a thickness of 20 and the separator was dried at 70°C to obtain a separator having a ceramic-coated surface.

<Surfactant treatment>

A solution containing 1% by mass of polyoxyethylene alkyl ether (trade name: LEOCOL SC-50, manufactured by LION SPECIALTY CHEMICALS CO., LTD.) and 99% by mass of ethanol was prepared, the solution was applied onto the entire surface of a PE separator having a void ratio of 45% and a thickness of 20 $\mu$m, and the separator was dried at 70°C to obtain a separator having a surfactant-treated surface.

<Measurement method of contact angle of added solvent with respect to separator>

A contact angle of the added solvent with respect to the separator was measured by static contact angle measurement at 25°C. As a contact angle meter, DMs-301 manufactured by Kyowa Interface Science Co., Ltd. was used. 2 $\mu$L of liquid droplet was discharged from a syringe filled with the added solvent onto the separator placed on a stage of the contact angle meter, an image was captured from the side 5 seconds after the dropping, and the contact angle was measured by measuring an angle formed by the liquid droplet and the separator.

[Production of non-aqueous electrolytic solution secondary battery (semi-solid state secondary battery)]

The slurry for forming a positive electrode shown in the table below was applied onto an aluminum collector having a length of 8 cm and a width of 5 cm with a thickness of 300 $\mu$m to form a slurry-like positive electrode active material layer, thereby obtaining a positive electrode. In addition, the slurry for forming a negative electrode prepared as described above was applied onto a copper collector having a length of 8 cm and a width of 5 cm with a thickness of 300 $\mu$m to form a slurry-like negative electrode active material layer, thereby obtaining a negative electrode. The separator was overlapped on the slurry-like negative electrode active material layer of the negative electrode in contact with the slurry-like negative electrode active material layer, and then a specific amount of the "added solvent" shown in the table below was added onto the separator. Next, the positive electrode was overlapped on the separator such that the slurry-like positive electrode active material layer was in contact with the separator on a side opposite to the slurry-like negative electrode active material layer.

An aluminum tab was attached to an end part of the aluminum collector and a nickel tab was attached to an end part of the copper collector by ultrasonic welding to obtain an electrode group. The electrode group was sandwiched between two aluminum laminate films, three sides were heat-sealed, and the remaining one side was vacuum-sealed to produce a laminated type battery. In this way, each of the semi-solid state secondary batteries of Examples 1 to 11, Comparative Examples 1 to 3, and Reference Example was obtained.

[Test Example 2: Test for battery performance]

<Discharge capacity retention rate>

The laminated battery was charged under the following charging conditions, and then discharged under the following discharging conditions to initialize the battery. In the initialization, an initial discharge capacity was 100 mAh. Next, the battery was charged under the following test charging conditions, and then discharged under the following test discharging conditions to measure a discharge capacity Y mAh. A discharge capacity retention rate was calculated from the following expression, and the calculated value was applied to the following evaluation standard to evaluate the battery performance. The results are shown in the table below.

(Charging conditions)

CC-CV charging: current value of 10 mA, upper limit voltage of 3.6 V, termination current value of 0.5 mA

(Discharging conditions)

CC discharging: current value of 10 mA, upper limit voltage of 2.0 V

(Test charging conditions)

CC-CV charging: current value of 10 mA, upper limit voltage of 3.6 V, termination current value of 0.5 mA

(Test discharging conditions)

CC discharging: current value of 100 mA, upper limit voltage of 2.0 V

$$\text{Discharge capacity retention rate (\%)} = (Y \text{ mAh}/100 \text{ mAh}) \times 100$$

-Evaluation standard-

A: 90% or more
B: 85% or more and less than 90%
C: 80% or more and less than 85%
D: 75% or more and less than 80%
E: 70% or more and less than 75%
F: less than 70%

<Volumetric energy density>

After the initialization, the discharge energy (Wh) of each of the produced semi-solid state secondary batteries was calculated from the discharge capacity (Ah) and the average voltage (V) at 0.1C (10 mA). In addition, the volume (L) of the laminate (power generation element) consisting of the positive electrode collector, the slurry-like positive electrode active material layer, the separator, the slurry-like negative electrode active material layer, and the negative electrode collector was calculated from the total thickness (m) of the laminate and the area (m$^2$) of the positive electrode. The volumetric energy density was calculated as discharge energy (Wh)/volume (L) of the power generation element, and evaluated according to the following evaluation standard.

-Evaluation standard-

A: 400 Wh/L or more

B: 390 Wh/L or more and less than 400 Wh/L

C: 380 Wh/L or more and less than 390 Wh/L

D: 370 Wh/L or more and less than 380 Wh/L

E: 360 Wh/L or more and less than 370 Wh/L

F: less than 360 Wh/L

[Table 1]

| | Slurry for forming positive electrode | | Added solvent | Separator | | Amount of added solvent in non-aqueous solution of electrode active material layer (% by mass) | Test result | | |
|---|---|---|---|---|---|---|---|---|---|
| | Type | Content of active material (% by mass) | | Surface treatment | Contact angle of added solvent | | Collapse | Discharge capacity retention rate | Volumetric energy density |
| Example 1 | (a) | 80 | AN | No | 60° | 5 | A | B | B |
| Example 2 | (a) | 80 | DMC | No | 50° | 5 | A | B | B |
| Example 3 | (a) | 80 | DEE | No | 55° | 5 | A | B | B |
| Example 4 | (a) | 80 | AN | No | 60° | 5 | A | B | B |
| Example 5 | (a) | 80 | AN | No | 60° | 5 | A | B | B |
| Example 6 | (b) | 80 | AN | No | 60° | 5 | A | B | B |
| Example 7 | (a) | 80 | AN | Ceramic coating treatment | 25° | 5 | A | A | B |
| Example 8 | (a) | 80 | AN | Surfactant treatment | 25° | 5 | A | A | B |
| Example 9 | (c) | 78 | AN | No | 60° | 5 | A | B | C |
| Example 10 | (d) | 82 | AN | No | 60° | 5 | A | B | A |
| Example 11 | (d) | 82 | AN | Surfactant treatment | 25° | 5 | A | A | A |

(continued)

| | Slurry for forming positive electrode | | Added solvent | Separator | | Amount of added solvent in non-aqueous solution of electrode active material layer (% by mass) | Test result | | |
|---|---|---|---|---|---|---|---|---|---|
| | Type | Content of active material (% by mass) | | Surface treatment | Contact angle of added solvent | | Collapse | Discharge capacity retention rate | Volumetric energy density |
| Comparative Example 1 | (e) | 80 | No | No | - | - | G | F | D |
| Comparative Example 2 | (a) | 80 | EMC | No | 50° | 5 | A | F | F |
| Comparative Example 3 | (e) | 80 | AN | No | 60° | 5 | G | D | D |
| Reference Example | (f) | 65 | No | No | - | - | A | A | F |
| AN: acetonitrile<br>DMC: dimethyl carbonate<br>DEE: diethyl ether<br>EMC: ethyl methyl carbonate | | | | | | | | | |

As shown in the above table, in a case where the solvent having a vapor pressure of 4.0 kPa or more was added to the slurry for forming a positive electrode, and the slurry was used for forming the slurry-like positive electrode active material layer, the slurry-like positive electrode active material layer was likely to collapse, and the battery performance was also deteriorated (Comparative Examples 1 and 3). In the collapse test, the collapse of the slurry-like positive electrode active material layer in a case where the plane direction of the slurry-like positive electrode active material layer was set to the vertical direction was evaluated. However, even in a case where the battery was produced in a state in which the slurry-like positive electrode active material layer was maintained horizontally, as the collapse was high in the collapse test, the slurry-like positive electrode active material layer was likely to be micro-cracked or the like due to the volatilization of the solvent having a vapor pressure of 4.0 kPa or more. As a result, the battery performance was deteriorated.

In addition, in a case where the solvent having a vapor pressure of 4.0 kPa or more was not added to the slurry for forming a positive electrode, and the solvent having a vapor pressure of 4.0 kPa or more was not added after the formation of the slurry-like positive electrode active material layer, the formed slurry-like positive electrode active material layer was not likely to collapse, but the battery performance was deteriorated (Comparative Example 2). It is considered that this is because the fluidity of the slurry-like positive electrode active material layer was reduced because of the high content of the positive electrode active material, and as a result, the ion conductivity was reduced.

In Reference Example, the solvent having a vapor pressure of 4.0 kPa or more was added to the slurry for forming a positive electrode, and the slurry was used for forming the slurry-like positive electrode active material layer, but the content of the positive electrode active material in the slurry for forming a positive electrode was as low as 65% by mass. In Reference Example, it was found that the formed slurry-like positive electrode active material layer was not likely to collapse. That is, it was found that the problem of the collapse of the formed slurry-like positive electrode active material layer was manifested in a case where the slurry-like positive electrode active material layer had a higher content of the positive electrode active material (in a case where the slurry-like positive electrode active material layer was in a state closer to a powder). As a result, the volumetric energy density was deteriorated in Reference Example in which the amount of the positive electrode active material used was small.

In contrast to these results, in the semi-solid state secondary battery obtained by the manufacturing method according to the embodiment of the present invention, although the slurry-like positive electrode active material layer had a higher content of the positive electrode active material, the formed slurry-like positive electrode active material layer was not likely to collapse, and the battery performance was also excellent (Examples 1 to 11).

The present invention has been described with the embodiments thereof, any details of the description of the present invention are not limited unless described otherwise, and it is obvious that the present invention is widely construed without departing from the gist and scope of the present invention described in the accompanying claims.

The present application claims the priority of JP2023-090135 filed in Japan on May 31, 2023, the contents of which are incorporated herein by reference, as a part of the description of the present specification.

Explanation of References

10: non-aqueous electrolytic solution secondary battery
1: negative electrode collector
2: negative electrode active material layer
3: separator
4: positive electrode active material layer
5: positive electrode collector
6: operation portion (light bulb)

## Claims

1. A method for manufacturing a non-aqueous electrolytic solution secondary battery in which a positive electrode collector, a positive electrode active material layer, a separator, a negative electrode active material layer, and a negative electrode collector are laminated in this order, the method comprising:
applying a slurry for forming a positive electrode onto the positive electrode collector to form a slurry-like positive electrode active material layer, and adding a solvent having a vapor pressure of 4.0 kPa or more to the slurry-like positive electrode active material layer, the slurry for forming a positive electrode, containing a positive electrode active material at a content of 75% by mass or more, a conductive auxiliary agent, an electrolyte, and a non-aqueous solvent (I) in which a content of the solvent having a vapor pressure of 4.0 kPa or more is less than 1.0% by mass.

2. The method for manufacturing a non-aqueous electrolytic solution secondary battery according to claim 1, wherein the content of the solvent having a vapor pressure of 4.0 kPa or more in the non-aqueous solvent (I) is less than 0.1% by mass.

3. The method for manufacturing a non-aqueous electrolytic solution secondary battery according to claim 1 or 2, wherein a contact angle of the solvent having a vapor pressure of 4.0 kPa or more with respect to the separator is 45° or less.

4. The method for manufacturing a non-aqueous electrolytic solution secondary battery according to claim 1 or 2, further comprising:
applying a slurry for forming a negative electrode onto the negative electrode collector to form a slurry-like negative electrode active material layer, and adding a solvent having a vapor pressure of 4.0 kPa or more to the slurry-like negative electrode active material layer, the slurry for forming a negative electrode, containing a negative electrode active material, a conductive auxiliary agent, an electrolyte, and the non-aqueous solvent (I).

5. A non-aqueous electrolytic solution secondary battery obtained by the method for manufacturing a non-aqueous electrolytic solution secondary battery according to claim 1 or 2.

FIG. 1

## INTERNATIONAL SEARCH REPORT

| International application No. |
| --- |
| **PCT/JP2024/018889** |

| **A.** | **CLASSIFICATION OF SUBJECT MATTER** |
| --- | --- |

*H01M 4/139*(2010.01)i; *H01M 4/13*(2010.01)i; *H01M 4/62*(2006.01)i; *H01M 10/052*(2010.01)i; *H01M 10/054*(2010.01)i;
*H01M 10/058*(2010.01)i; *H01M 10/0566*(2010.01)i
FI:    H01M4/139; H01M10/0566; H01M4/62 Z; H01M10/058; H01M4/13; H01M10/052; H01M10/054

According to International Patent Classification (IPC) or to both national classification and IPC

| **B.** | **FIELDS SEARCHED** |
| --- | --- |

Minimum documentation searched (classification system followed by classification symbols)

H01M4/139; H01M4/13; H01M4/62; H01M10/052; H01M10/054; H01M10/058; H01M10/0566

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| **C.** | **DOCUMENTS CONSIDERED TO BE RELEVANT** | |
| --- | --- | --- |

| Category* | Citation of document, with indication, where appropriate, of the relevant passages | Relevant to claim No. |
| --- | --- | --- |
| Y | JP 2019-057449 A (TOYOTA JIDOSHA KABUSHIKI KAISHA) 11 April 2019 (2019-04-11) claims, paragraph [0045] | 1-3, 5 |
| A | entire text | 4 |
| Y | JP 2013-004215 A (HITACHI, LTD.) 07 January 2013 (2013-01-07) claims, paragraph [0063] | 1-5 |
| Y | JP 2000-149905 A (SONY CORPORATION) 30 May 2000 (2000-05-30) claims, paragraphs [0068]-[0074] | 1-5 |
| Y | JP 2018-073530 A (TOYOTA JIDOSHA KABUSHIKI KAISHA) 10 May 2018 (2018-05-10) claims, paragraphs [0050]-[0058] | 1-5 |
| Y | JP 2011-138646 A (HITACHI, LTD.) 14 July 2011 (2011-07-14) paragraph [0069], examples | 1-5 |

☑ Further documents are listed in the continuation of Box C.          ☑ See patent family annex.

| | |
| --- | --- |
| \*    Special categories of cited documents: | "T"   later document published after the international filing date or priority date and not in conflict with the application but cited to understand the principle or theory underlying the invention |
| "A"   document defining the general state of the art which is not considered to be of particular relevance | |
| "D"   document cited by the applicant in the international application | "X"   document of particular relevance; the claimed invention cannot be considered novel or cannot be considered to involve an inventive step when the document is taken alone |
| "E"   earlier application or patent but published on or after the international filing date | |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
| --- | --- |
| **23 July 2024** | **06 August 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**

| International application No. |
| --- |
| **PCT/JP2024/018889** |

| C. | DOCUMENTS CONSIDERED TO BE RELEVANT |  |
| --- | --- | --- |

| Category* | Citation of document, with indication, where appropriate, of the relevant passages | Relevant to claim No. |
| --- | --- | --- |
| Y | JP 2012-094460 A (HITACHI, LTD.) 17 May 2012 (2012-05-17)<br>paragraph [0075], examples | 1-5 |

INTERNATIONAL SEARCH REPORT
Information on patent family members

| International application No. |
| --- |
| **PCT/JP2024/018889** |

| Patent document cited in search report | | | Publication date (day/month/year) | Patent family member(s) | | | Publication date (day/month/year) |
| --- | --- | --- | --- | --- | --- | --- | --- |
| JP | 2019-057449 | A | 11 April 2019 | US claims | 2019/0097199 | A1 | |
| | | | | DE claims | 102018216159 | A1 | |
| | | | | CN claims | 109546058 | A | |
| JP | 2013-004215 | A | 07 January 2013 | US claims | 2012/0321950 | A1 | |
| | | | | CN claims | 102832365 | A | |
| JP | 2000-149905 | A | 30 May 2000 | (Family: none) | | | |
| JP | 2018-073530 | A | 10 May 2018 | US claims | 2018/0114970 | A1 | |
| | | | | CN claims | 107994250 | A | |
| | | | | KR claims | 10-2018-0045816 | A | |
| JP | 2011-138646 | A | 14 July 2011 | (Family: none) | | | |
| JP | 2012-094460 | A | 17 May 2012 | (Family: none) | | | |

Form PCT/ISA/210 (patent family annex) (July 2022)

**REFERENCES CITED IN THE DESCRIPTION**

**Patent documents cited in the description**

- JP 2017147222 A
- JP 2019186009 A
- JP 2016201308 A
- JP 2005108835 A
- JP 2012185938 A
- WO 2018135395 A
- JP 2023090135 A